# FASCICULE DE BREVET EUROPEEN

(11) **EP 2 298 580 B1**
(45) Date de publication et mention de la délivrance du brevet: **30.11.2011**
(21) Numéro de dépôt: 09170819.8
(22) Date de dépôt: 21.09.2009
(51) Int. Cl.: B60C 25/138

(54) **Machine de montage et de démontage de pneus**
Maschine zum Montieren und Demontieren von Reifen
Machine for installing and removing tyres

(43) Date de publication de la demande: 23.03.2011
(73) Titulaire: du Quesne, Bertrand, 1030 Schaarbeek (BE)
(72) Inventeur: du Quesne, Bertrand, 1030 Schaarbeek (BE); du Quesne, Francis, 2630 Aartselaar (BE)
(74) Mandataire: De Groote, Christophe

(56) Documents cités:
- EP-A- 1 593 533
- DE-A1- 4 415 064

## Description

### Domaine de l'invention

L'invention se rapporte à une machine de montage et de démontage de pneu d'une jante de roue, comportant un bâti, un plateau apte à y fixer la jante et à entraîner ladite jante en rotation et de manière centrée autour d'un axe(Y), et un outil de montage et de démontage du pneu.

### État de la technique

De telles machines sont connues de longue date et permettent de monter et /ou de démonter un pneu d'une jante, par exemple d'une roue de voiture ou de camion ou de moto. Pour effectuer cette opération, la jante est d'abord fixée au plateau de telle sorte que son axe coïncide avec l'axe de rotation du plateau. On amène ensuite l'outil de montage/démontage par-dessus la jante pour le positionner près du bord de la jante. On procède ensuite au démontage et/ou au montage du pneu de manière connue.

Les machines connues ont jusqu'à présent proposé d'amener l'outil de montage/démontage près du bord de jante selon deux types de mécanismes différents.

Selon un premier type de mécanisme, connu par exemple du brevet EP 1775148, la machine comporte une colonne verticale solidaire du bâti et un bras mobile horizontal monté en rotation autour de l'axe de la colonne verticale. Ce bras mobile possède en son extrémité distale une barre verticale à l'extrémité de laquelle est fixée l'outil. Ladite barre verticale est montée en translation verticale par rapport au bras mobile.

Avec un tel mécanisme, l'outil peut être amené près du bord de jante, d'abord en faisant pivoter le bras horizontal jusqu'à ce que l'outil soit au droit du bord de jante, et ensuite en faisant coulisser la barre verticalement jusqu'à ce que l'outil soit quasiment en contact avec le bord de jante. Le mécanisme est ensuite bloqué dans cette position avant de procéder au montage ou au démontage du pneu.

Toutefois, avec un tel mécanisme, le porte-à-faux de l'outil par rapport à la colonne verticale est relativement important. Ceci présente l'inconvénient que le mécanisme - et en particulier le bras horizontal - subira des déformations relativement fortes lorsque le pneu est monté ou démonté de la jante, ce qui risque de provoquer un contact entre l'outil et la jante et ainsi d'abîmer la jante. Par ailleurs, suite au pivotement du bras horizontal, la position azimutale de l'outil par rapport à la jante variera avec le diamètre de la jante, de sorte qu'avec un tel mécanisme il n'est pas possible de positionner l'outil de manière optimale pour différents diamètres de jante.

Ce deux problèmes sont d'autant plus marqués que la différence entre le plus grand et le plus petit diamètre de jante est important.

Selon un deuxième type de mécanisme, connu par exemple du brevet EP 1593533, la machine comporte une colonne verticale solidaire du bâti et un bras mobile horizontal monté en translation perpendiculairement à la colonne verticale et radialement par rapport à la jante. Ce bras mobile possède également, en son extrémité distale, une barre verticale à l'extrémité de laquelle est fixée l'outil. Ladite barre verticale est montée en translation verticale par rapport au bras mobile.

Avec un tel mécanisme, l'outil peut être amené près du bord de jante, d'abord en faisant coulisser le bras horizontal jusqu'à ce que l'outil soit au droit du bord de jante, et ensuite en faisant coulisser la barre verticalement jusqu'à ce que l'outil soit quasiment en contact avec le bord de jante. Le mécanisme est ensuite bloqué dans cette position avant de procéder au montage ou au démontage du pneu.

Ainsi, avec ce deuxième type de mécanisme, la position azimutale de l'outil par rapport à la jante ne variera pas avec le diamètre de la jante à traiter.

Toutefois, de part le mécanisme de coulissement du bras horizontal, du jeu se manifestera avec le temps entre le bras horizontal et la colonne verticale, entraînant ainsi un mauvais alignement de l'outil par rapport à la jante et un risque de contact avec cette dernière.

Par ailleurs, avec un tel mécanisme, le porte-à-faux de l'outil par rapport à la colonne verticale est également relativement important, et ceci d'autant plus que la différence entre le plus grand et le plus petit diamètre de jante est important. Il présente donc de ce point de vue les mêmes inconvénients que le premier mécanisme.

### Résumé de l'invention

Un but de l'invention est de fournir une machine de montage et de démontage de pneus qui ne présente pas un ou plusieurs des inconvénients des machines connues.

A cette fin, la machine selon l'invention est caractérisée en ce qu'elle comporte une structure mobile ayant quatre bras (A,B,C,D), lesdits bras étant reliés entre eux deux par deux au moyen de quatre pivots(p,q,r,s) ayant respectivement quatre axes de pivot (X1,X2,X3,X4) parallèles entre eux, en ce qu'un premier des quatre bras (A) est solidaire du bâti, et en ce que l'outil de montage et de démontage est relié à un des autres bras (B,C,D).

Grâce à une telle machine, l'outil peut être amené à proximité d'un bord de la jante au moyen de liaisons mécaniques qui sont exclusivement du type rotatif, ce qui réduit les problèmes de jeu.

Par ailleurs, dans à un telle structure mobile, le porte-à-faux de l'outil par rapport aux bras C et D est constant, quel que soit le diamètre de la jante. Grâce à cela, le bras de levier maximal entre l'outil et les bras C et D peut être plus court que le bras de levier maximal entre l'outil et la colonne verticale des machines connues. Ceci permet de réduire les tensions et donc les déformations engendrées lorsque l'outil monte ou démonte le pneu. A dimensionnement égal, on obtient ainsi une machine plus rigide.

Un autre but de l'invention est de maintenir constante l'orientation horizontale de l'outil par rapport à un rayon de la jante passant par le point de contact entre l'outil et le bord de jante, et ceci quel que soit le diamètre de la jante mise en place sur la machine. Ceci permet en effet de toujours garantir un alignement correct de l'outil par rapport au bord de jante.

A cette fin, la machine selon l'invention est de préférence caractérisée en ce que l'axe de rotation (Y) du plateau est compris dans un plan orbital (P1) de l'outil.

Par plan orbital de l'outil, il faut entendre le plan dans lequel se déplace l'outil lorsque la structure mobile est mise en mouvement selon ses pivots (p,q,r,s) pour amener ou dégager l'outil de sa position de travail.

De cette manière, l'outil se déplacera exclusivement de manière radiale par rapport à la jante. Ainsi, lorsque l'outil est correctement aligné par rapport à une jante d'un diamètre donné, il restera correctement aligné lorsqu'une jante d'un diamètre différent est mise en place sur la machine.

Un autre but de l'invention est de maintenir constante l'inclinaison verticale de l'outil par rapport à un plan formé par le bord de jante lorsque la structure mobile est mise en mouvement selon ses pivots (p,q,r,s). Ceci permet en effet de garantir un alignement correct de l'outil par rapport au bord de jante, quel que soit le diamètre de la jante mise en place sur la machine.

A cette fin, la machine selon l'invention est de préférence caractérisée en ce que les quatre pivots forment substantiellement un parallélogramme et en ce que l'outil est relié à un deuxième des quatre bras (B) opposé au premier bras (A).

Ceci permet en effet à l'outil de se déplacer parallèlement à lui-même lorsque la structure mobile est mise en rotation.

Un autre but de l'invention est d'éviter que l'outil ne touche la jante suite aux déformations de la structure mobile lorsque l'outil est en train de monter ou de démonter un pneu.

A cette fin, la machine selon l'invention est de préférence caractérisée en ce que le troisième bras (C) et/ou le quatrième bras (D) sont/est décalé(s) par rapport au plan orbital (P1) de l'outil, dans le sens contraire au sens de rotation du plateau.

Grâce à cette disposition, la structure mobile se déformera en effet d'une manière telle que l'outil s'éloignera de la jante lorsqu'il en train de monter ou de démonter un pneu.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: montre schématiquement une vue de profil d'une machine selon l'invention ;
- Fig.2: montre schématiquement une vue de face de la machine de la Fig. 1 ;
- Fig.3: montre schématiquement une vue du haut de la machine de la Fig. 1 ;
- Figs. 4,5 et 6: montrent respectivement une vue de profil, de face et de haut d'une machine selon une version préférée de l'invention ;
- Figs. 7 et 8: montrent respectivement une vue de profil et une vue du haut d'une machine selon une autre version préférée de l'invention ;
- Figs. 9 et 10: montrent respectivement une vue de profil et une vue du haut d'une machine selon une encore une autre version préférée de l'invention ;
- Fig. 11: montre une vue de profil d'une machine selon encore une autre version préférée de l'invention ;
- Figs. 12, 13 et 14: montrent respectivement une vue de profil, de face et de haut d'une machine selon encore une autre version préférée de l'invention ;
- Fig. 15: montre une vue en perspective d'un exemple de machine selon l'invention.

Les dessins des figures ne sont pas à l'échelle.

Généralement, des éléments semblables sont dénotés par des références semblables dans les figures.

### Description détaillée de modes de réalisation particuliers

Les machines de montage et de démontage de pneu d'une jante de roue étant connues en général, leur principe de fonctionnement ne sera pas décrit ci après.

On se concentrera donc sur les aspects particuliers de la machine selon l'invention, à savoir le mécanisme qui permet d'amener l'outil de montage/démontage jusqu'à sa position de travail auprès de la roue après avoir montée celle-ci sur le plateau de la machine, et ensuite de dégager ledit outil pour pouvoir aisément retirer la roue du plateau. La position de travail de l'outil se situe quasiment contre un bord de la jante. De préférence, un léger écart est maintenu entre l'outil et le bord de la jante afin de ne pas abîmer la jante lorsque l'outil est en fonctionnement.

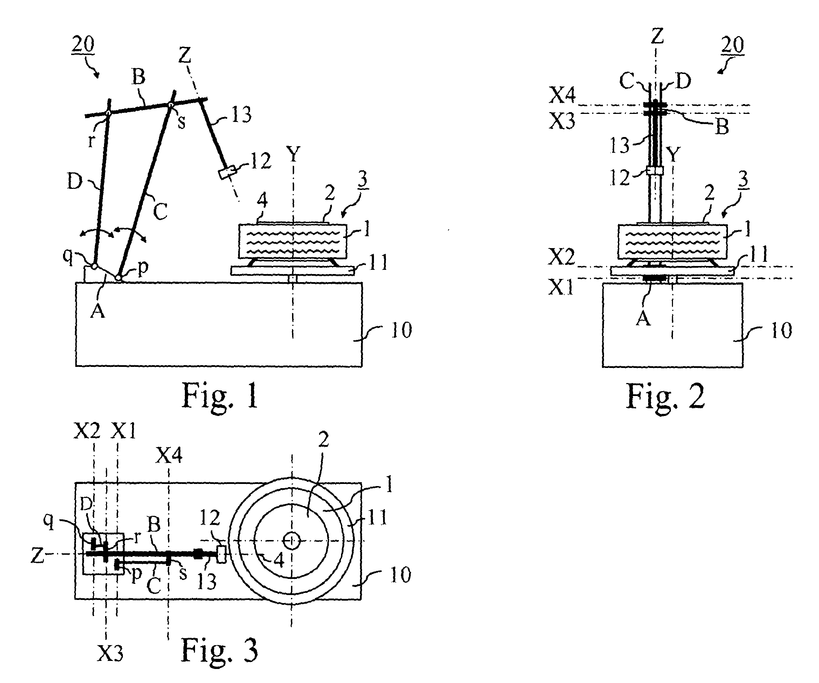

Comme l'illustrent les Figs. 1, 2 et 3, une machine de montage et de démontage de pneu (1) d'une jante (2) de roue (3) selon l'invention comporte un bâti (10) fixe ainsi qu'un plateau (11) rotatif selon un axe (Y) auquel il est possible de fixer la jante (2) de la roue (3) de manière centrée par rapport à l'axe (Y).

Le plateau (11) ne doit pas nécessairement être monté sur le bâti (10) ; il suffit que le plateau (11) soit directement ou indirectement solidaire du bâti (10).

Pour des raisons de facilité de la présente description, l'axe (Y) est un axe vertical. Toutefois, l'invention ne se limite pas à une telle configuration et il faut comprendre que l'axe (Y) du plateau peut avoir n'importe quelle autre orientation dans l'espace, tel que par exemple une orientation horizontale.

La machine selon l'invention comporte également une structure mobile (20) ayant quatre bras : une premier bras (A), un deuxième bras (B), un troisième bras (C) et un quatrième bras (D). Ces quatre bras (A,B,C,D) sont reliés entre eux deux par deux au moyen de quatre pivots (p,q,r,s) ayant respectivement quatre axes de pivot (X1,X2,X3,X4). Ces quatre axes de pivot (X1,X2,X3,X4) sont parallèles entre eux, comme illustré sur la Fig.1. Les bras ne doivent pas nécessairement être rectilignes. Chaque bras peut avoir n'importe quelle forme, du moment que la structure mobile (20) puisse effectuer un mouvement de rotation autour de ses pivots (p,q,r,s).

Le premier bras (A) est solidaire du bâti (10). Il peut s'agir par exemple d'une pièce à part entière et solidaire du bâti (10) ou bien d'une partie même du bâti (10). Ce qui importe est que les pivots p et q soient reliés ensemble ainsi qu'au bâti (10).

L'outil (12) de montage et de démontage est relié à un des autres bras (B,C,D) au moyen d'un porte-outil (13), par exemple un barreau. Dans l'exemple de la Fig.1, l'outil (12) est relié au deuxième bras (B), mais il pourrait tout aussi bien être relié au troisième bras (C) ou au quatrième bras (D).

L'ordre dans lequel les quarte bras (A,B,C,D) se succèdent dans une direction selon un axe de pivot (X1,X2,X3,X4) est sans importance. L'ordre tel qu'illustré en Fig.3 est purement exemplatif.

Ainsi, lorsque la structure mobile (20) est mise en mouvement autour de ses pivots (p,q,r,s), l'outil (12) se déplacera horizontalement et verticalement par rapport à la jante (2), ce qui permettra de rapprocher ou d'éloigner l'outil (12) de sa position de travail en bord de jante (4). Ce mouvement peut être engendré par la force humaine, par exemple par un opérateur qui actionne le mouvement de la structure mobile (20), ou par une autre force motrice, par exemple un moteur électrique. Le mouvement peut être commandé manuellement ou automatiquement.

De préférence, la machine comporte au moins un dispositif de fin de course afin de limiter - dans un sens et/ou dans l'autre - l'ampleur du mouvement de la structure mobile (20) autour de ses pivots (p,q,r,s). De préférence, la machine comporte également des moyens pour bloquer la structure mobile (20) dans une de ses positions, en particulier dans la position où l'outil (12) est dans sa position de travail. Des moyens classiques de blocage peuvent être utilisés à cette fin.

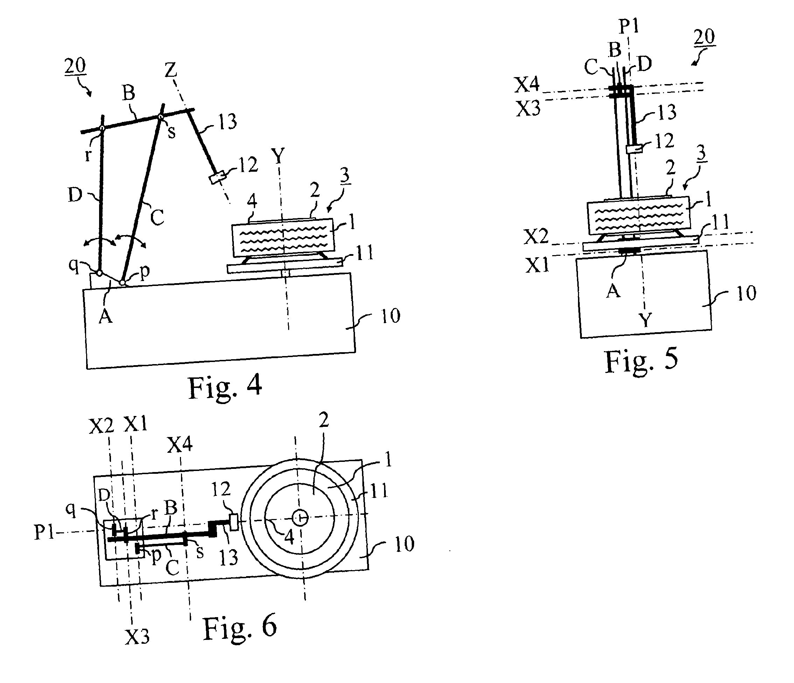

Les Figs. 4, 5 et 6 montrent une machine selon une version préférée de l'invention.

Selon ce mode de réalisation, l'axe (Y) du plateau (11) est substantiellement dans un plan orbital (P1) de l'outil (12), comme on le voit le mieux en Figs. 5 et 6. Par plan orbital de l'outil, il faut comprendre le plan dans lequel se déplace l'outil (12) lorsque la structure mobile (20) est mise en mouvement autour de ses pivots (p,q,r,s) pour amener ou dégager l'outil de sa position de travail, comme indiqué par les doubles flèches dans la Fig. 4. Ceci permet de déplacer l'outil (12) de manière exclusivement radiale par rapport à la jante (2).

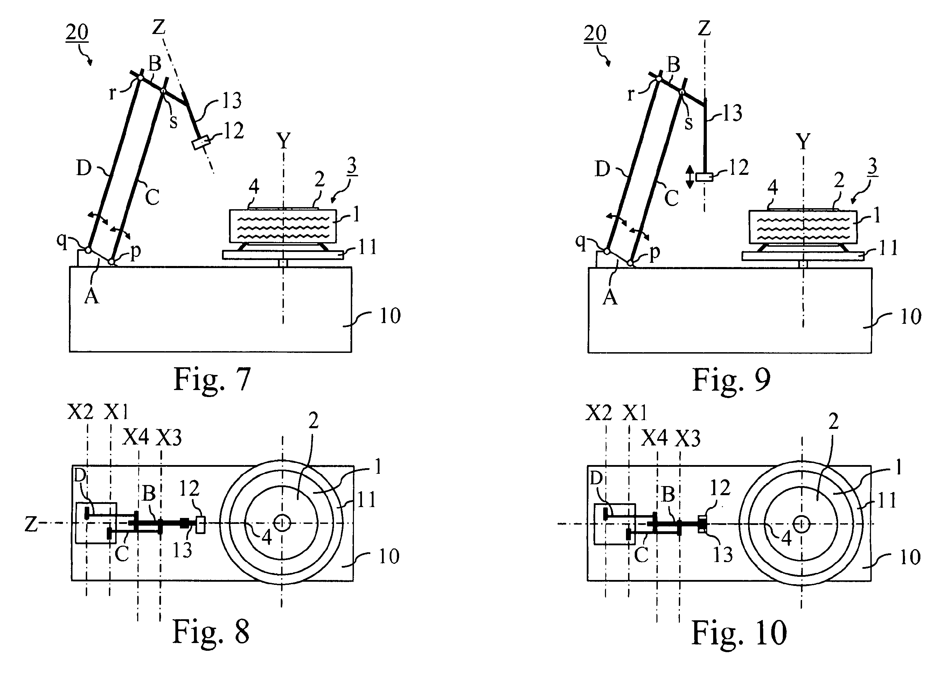

Les Figs. 7 et 8 montrent une machine selon une autre version préférée de l'invention.

Selon ce mode de réalisation, les quatre pivots (p,q,r,s) forment substantiellement un parallélogramme et l'outil (12) est relié à un deuxième des quatre bras (B) opposé au premier bras (A). Il faut comprendre par là qu'on obtient un parallélogramme lorsqu'on relie par des segments de droite les intersections entre les axes de pivot (X1,X2,X3,X4) et un plan perpendiculaire auxdits axes de pivot.

De cette manière, l'outil (12) se déplacera parallèlement à lui-même lorsque la structure mobile (20) est mise en mouvement selon ses pivots (p,q,r,s) et l'outil (12) gardera toujours la même inclinaison par rapport à un plan horizontal formé par un bord de la jante (2). Il est à nouveau à noter que les bras (A,B,C,D) ne doivent pas nécessairement être rectilignes comme illustré en Fig. 7, mais qu'ils peuvent avoir un forme quelconque.

Les Figs. 9 et 10 montrent un mode de réalisation préféré de la machine telle qu'illustrée en Figs. 7 et 8.

Selon ce mode de réalisation préféré, l'outil (12) est relié au deuxième bras (B) de telle sorte qu'un axe(Z) de l'outil (12) est parallèle à l'axe (Y) du plateau (11). Cet axe (Z) est un axe traversant l'outil (12) et perpendiculaire au plan formé par le bord de la jante (2) lorsque l'outil (12) est en position nominale de travail sur le bord (4) de la jante (2).

Etant donné que les quatre pivots forment - dans ce mode de réalisation préféré - un parallélogramme, l'outil (12) se déplacera parallèlement à lui-même lorsque la structure mobile (20) est mise en mouvement, et l'outil (12) viendra donc toujours se placer en bonne position de travail sur le bord (4) de la jante (2), quel que soit le diamètre de la jante (2) mise en place sur le plateau (11).

De préférence, l'outil (12) est relié à un des autres bras (B,C,D) de manière mobile en translation selon l'axe (Z) de l'outil (12). Ceci permet de régler la distance entre l'outil (12) et le bord (4) de jante (2), indépendamment de l'angle de rotation de la structure mobile (20) autour de ses pivots (p,q,r,s).

Les Figs. 9 et 10 montrent par exemple le cas d'un outil (12) porté par un porte-outil (13), tel que par exemple une barre oblongue, dont l'axe est parallèle ou se confond avec l'axe (Z) de l'outil (12). Dans un tel cas, le porte-outil (13) peut par exemple être monté en translation selon l'axe (Z) au deuxième bras (B) avec des moyens bien connus.

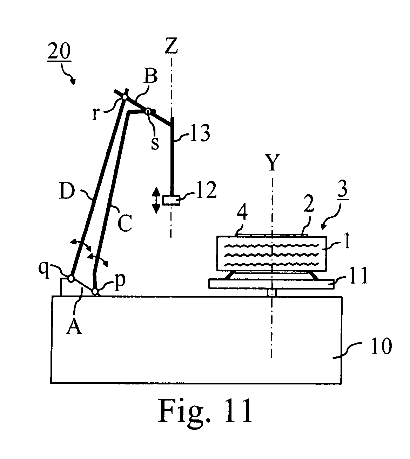

La Fig. 11 montre une machine selon une autre version préférée de l'invention.

Selon ce mode de réalisation, le troisième bras (C) est de forme concave lorsqu'il est vu de l'outil (12). Le troisième bras (C) peut par exemple avoir une forme de « U » dont les branches vont en s'évasant vers les pivots (p,s) reliant ledit troisième bras au premier et au deuxième bras.

Ceci permet d'obtenir un meilleur dégagement pour l'outil (12) lorsque celui-ci est placé en position de repos (par opposition a sa position de travail) pour pouvoir retirer la roue (3) après le montage d'un pneu (1). De préférence, la concavité est telle que la structure mobile (20) puisse être positionnée au delà de son point mort haut.

Cette forme concave permet également de rapprocher le pivot « p » du plateau (11), de manière à obtenir une machine plus compacte.

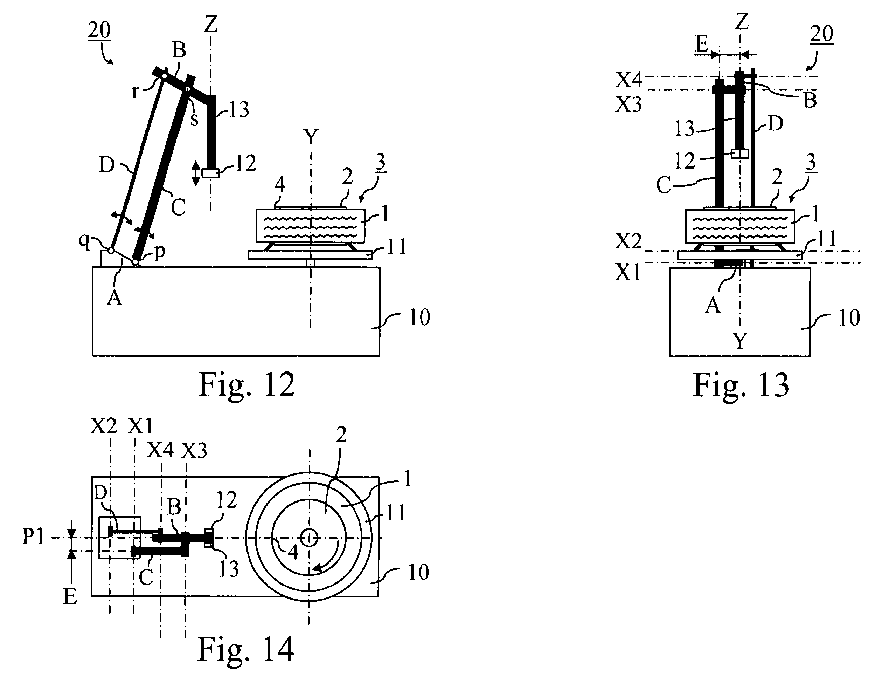

Les Figs. 12,13 et 14 montrent un mode de réalisation d'une machine selon une autre version préférée de l'invention.

Selon ce mode de réalisation, le troisième bras (C) est surdimensionné par rapport au quatrième bras (D). Il s'agit donc d'un mode de réalisation dans lequel le troisième bras (C) reprendra la majorité efforts dus aux forces de frottement entre le pneu (1) et l'outil (12) lorsque l'outil (12) est occupé à monter ou à démonter le pneu (1) et lorsque le plateau (11) est en rotation (forces tangentielles à la jante au point de contact entre le pneu et l'outil). Dans un cas extrême, le quatrième bras (D) peut par exemple être une simple lame ou un câble, alors que le bras troisième bras (C) est une poutre.

La position du troisième bras (C) est décalée dans le sens contraire au sens de rotation du plateau (11) par rapport au plan orbital (P1) de l'outil (12). Le sens de rotation du plateau (11) est indiqué par une flèche sur la Fig. 14.

Grâce à cette configuration, la force résultante sur la structure mobile (20) sera dirigée vers l'extérieur de la jante (2) et la déformation de la structure mobile (20) suite auxdites forces de frottement résultera en un éloignement de l'outil (12) par rapport à la jante (2). Cet effet est particulièrement appréciable car il permet d'éviter que l'outil (12) entre en contact avec la jante (2) et donc qu'il la griffe.

Selon un autre mode de réalisation de cette version préférée de l'invention, le quatrième bras (D) est surdimensionné par rapport au troisième bras (C) et la position du quatrième bras (D) est décalée dans le sens contraire au sens de rotation du plateau (11) par rapport au plan orbital (P1) de l'outil (12).

Selon encore un autre mode de réalisation de cette version préférée de l'invention, la position du troisième bras (C) et du quatrième bras (D) sont toutes les deux décalées dans le sens contraire au sens de rotation du plateau (11) par rapport au plan orbital (P1) de l'outil (12).

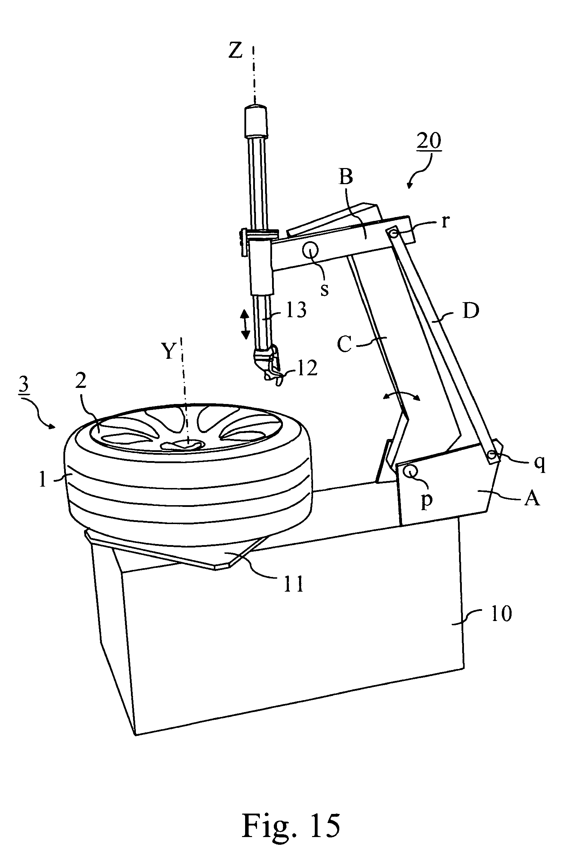

La Fig. 15 montre une vue en perspective d'un exemple de machine selon l'invention.

En résumé, l'invention peut également être décrite comme suit :

Machine pour le montage et le démontage de pneu (1) d'une jante (2) de roue (3). La machine comporte un bâti (10), un plateau tournant (11) pour y fixer la roue par sa jante et pour entraîner la jante en rotation autour de son axe (Y), et un outil (12) pour monter et/ou démonter le pneu de la jante. L'outil (12) est relié au bâti (10) au moyen d'une structure mobile (20) apte à déplacer l'outil (12) horizontalement et verticalement jusqu'à sa position de travail se situant près du bord proximal (4) de la jante (2) lorsque la roue (3) est montée sur le plateau tournant (11). La structure mobile (20) comporte quatre bras (A,B,C,D) reliés entre eux deux à deux au moyen de quatre pivots (p,q,r,s) dont les axes (X1,X2,X3,X4) sont parallèles entre eux. Un des bras (A) est solidaire du bâti (10) et l'outil (12) est relié à un des autres bras (B,C,D). L'outil (12) est ainsi déplaçable, horizontalement et verticalement, exclusivement au moyen de liaisons rotatives entre l'outil (12) et le bâti (10). Par ailleurs, le bras de levier entre l'outil (12) et la structure mobile (20) est constant et peut être relativement court, quel que soit le diamètre de la jante (2).

## Revendications

1. Machine de montage et de démontage de pneu (1) d'une jante (2) de roue (3) comportant un bâti (10), un plateau (11) apte à y fixer la jante (2) et à entraîner ladite jante (2) en rotation et de manière centrée autour d'un axe (Y), et un outil (12) de montage et de démontage du pneu (1), **caractérisé en ce que** la machine comporte une structure mobile (20) ayant quatre bras (A,B,C,D), lesdits bras étant reliés entre eux deux par deux au moyen de quatre pivots(p,q,r,s) ayant respectivement quatre axes de pivot (X1,X2,X3,X4) parallèles entre eux, **en ce qu'**un premier des quatre bras (A) est solidaire du bâti (10), et **en ce que** l'outil (12) est relié à un des autres bras (B,C,D);

2. Machine selon la revendication 1, **caractérisée en ce que** l'axe (Y) du plateau (11) est substantiellement dans un plan orbital (P1) de l'outil (12) ;

3. Machine selon la revendication 2, **caractérisée en ce que** les quatre pivots (p,q,r,s,) forment substantiellement un parallélogramme et **en ce que** l'outil (12) est relié à un deuxième des quatre bras (B) opposé au premier bras (A);

4. Machine selon la revendication 3, **caractérisée en ce qu'**un axe (Z) de l'outil (12) est parallèle à l'axe (Y) du plateau (11);

5. Machine selon l'une quelconque des revendications précédentes, **caractérisée en ce que** l'outil (12) est relié à un des autres bras (B,C,D) de manière mobile en translation selon une axe (Z) de l'outil (12);

6. Machine selon l'une quelconque des revendications précédentes, **caractérisée en ce**, vu de l'outil (12), le troisième bras (C) est de forme concave;

7. Machine selon l'une quelconque des revendications 2 à 6, **caractérisée en ce que** le troisième bras (C) est décalé par rapport au plan orbital (P1) de l'outil (12), dans le sens contraire au sens de rotation du plateau (11);

8. Machine selon l'une quelconque des revendications 2 à 7, **caractérisée en ce que** le quatrième bras (D) est décalé par rapport au plan orbital (P1) de l'outil (12), dans le sens contraire au sens de rotation du plateau (11).

## Claims

1. A machine for fitting and removing a tire (1) from a rim (2) of a wheel (3) comprising a frame (10), a table (11) capable of attaching the rim (2) thereto and of rotating said rim (2) in a centered manner about an axis (Y), and a tool (12) for fitting and removing the tire (1), wherein the machine comprises a movable structure (20) having four arms (A, B, C, D), said arms being connected together two by two by means of four pivots (p, q, r, s) having respectively four pivot axes (X1, X2, X3, X4) parallel with one another, and wherein a first of the four arms (A) is secured to the frame (10), and wherein the tool (12) is connected to one of the other arms (B, C, D);

2. The machine as claimed in claim 1, wherein the axis (Y) of the table (11) is substantially in an orbital plane (P1) of the tool (12);

3. The machine as claimed in claim 2, wherein the four pivots (p, q, r, s,) substantially form a parallelogram and wherein the tool (12) is connected to a second of the four arms (B) opposite to the first arm (A);

4. The machine as claimed in claim 3, wherein an axis (Z) of the tool (12) is parallel with the axis (Y) of the table (11);

5. The machine as claimed in any one of the preceding claims, wherein the tool (12) is connected to one of the other arms (B, C, D) in a manner so as to be movable in translation along an axis (Z) of the tool (12);

6. The machine as claimed in any one of the preceding claims, wherein, seen from the tool (12), the third arm (C) is of concave shape;

7. The machine as claimed in any one of claims 2 to 6, wherein the third arm (C) is offset relative to the orbital plane (P1) of the tool (12), in the direction contrary to the direction of rotation of the table (11);

8. The machine as claimed in any one of claims 2 to 7, wherein the fourth arm (D) is offset relative to the orbital plane (P1) of the tool (12), in the direction contrary to the direction of rotation of the table (11).

## Patentansprüche

1. Maschine zum Montieren und Demontieren eines Reifens (1) an einer Felge (2) eines Rads (3), mit einem Rahmen (10), einem zur Befestigung der Felge (2) daran und zur Betätigung der Felge (2) zur Drehung in einer um eine Achse (Y) zentrierten Weise ausgebildeten Tisch (11), und einem Werkzeug (12) zum Montieren und Demontieren des Reifens (1), **dadurch gekennzeichnet, dass** die Maschine eine vier Arme (A, B, C, D) aufweisende bewegbare Struktur (20) besitzt, wobei die Arme paarweise miteinander verbunden sind mittels vier Gelenken (p, q, r, s), die jeweilige vier zueinander parallele Drehachsen (X1, X2, X3, X4) aufweisen, und dass ein erster der vier Arme (A) einstückig mit dem Rahmen (10) ausgebildet ist und das Werkzeug (12) mit einem der anderen Arme (B, C, D) verbunden ist.

2. Maschine nach Anspruch 1, **dadurch gekennzeichnet, dass** die Achse (Y) des Tisches (11) weitgehend in einer Orbitalebene (P1) des Werkzeugs (12) verläuft.

3. Maschine nach Anspruch 2, **dadurch gekennzeichnet, dass** die vier Gelenke (p, q, r, s) weitgehend ein Parallelogramm ausbilden und dass das Werkzeug (12) mit einem zweiten der vier Arme (B), dem ersten Arm (A) gegenüber, verbunden ist.

4. Maschine nach Anspruch 3, **dadurch gekennzeichnet, dass** eine Achse (Z) des Werkzeugs (12) parallel zur Achse (Y) des Tisches (11) verläuft.

5. Maschine nach einem der vorstehenden Ansprüche, **dadurch gekennzeichnet, dass** das Werkzeug (12) mit einem der anderen Arme (B, C, D) in einer entlang einer Achse (Z) des Werkzeugs (12) translatorisch bewegbaren Weise verbunden ist.

6. Maschine nach einem der vorstehenden Ansprüche, **dadurch gekennzeichnet, dass** vom Werkzeug (12) aus betrachtet, der dritte Arm (C) von konkaver Form ist.

7. Maschine nach einem der Ansprüche 2 bis 6, **dadurch gekennzeichnet, dass** der dritte Arm (C) bezogen auf die Orbitalebene (P1) des Werkzeugs (12) in einer zur Drehrichtung des Tisches (11) entgegengesetzten Richtung versetzt angeordnet ist.

8. Maschine nach einem der Ansprüche 2 bis 7, **dadurch gekennzeichnet, dass** der vierte Arm (D) bezogen auf die Orbitalebene (P1) des Werkzeugs (12) in einer zur Drehrichtung des Tisches (11) entgegengesetzten Richtung versetzt angeordnet ist.
